# EUROPEAN PATENT APPLICATION

(11) **EP 1 860 842 A1**
(43) Date of publication of application: **28.11.2007**
(21) Application number: 07106349.9
(22) Date of filing: 17.04.2007
(51) Int. Cl.: H04L 29/06, H04L 12/56

(54) **Connection adapter for communication device**

(30) Priority: 20.04.2006 JP 2006116637
(71) Applicant: Sanden Corporation, Isesaki-shi, Gunma 372-8502 (JP)
(72) Inventor: Iwazaki, Wataru, Isesaki-shi Gunma 372-8502 (JP)
(74) Representative: Haley, Stephen

(57) **Abstract**

A connection adapter (1) is disposed intervening between a communication module (20) for connection to a radio packet communication network (40) and high-level equipment (10) . The connection adapter (1) transmits in response to a TCP packet received from the high-level equipment (10) a confirming response packet to the high-level equipment (10) on behalf of a management computer (51), which is the communication destination, and the confirming response packet received from the management computer (51) is discarded.

## Description

The present invention relates to the field of telemetering used in such purposes as the collection of sales information from vending machines and to the field of telematics used in delivering traffic information to mobile objects and like purposes. More particularly, the present invention relates to a connection adapter for connecting a communication device used in these fields to high-level equipment using the communication device.

Today, telemetering and telematics techniques by which information is collected and/or delivered via radio packet communication networks are in increasingly extensive use. Originally, telemetering used to be a generic term referring to systems for reading measurements by measuring instruments via communication lines. Now it finds a much broader range of reference, covering not only reading of data but also the monitoring of operation and remote control of devices. Typical applications of telemetering include sales management systems for vending machines, consumption management systems for gas, water and other utilities, and management systems for unmanned parking lots. For one example of sales management system for vending machines, reference may be made to Japanese Patent Publication 2003-51056. Telematics means real-time supply of information to mobile objects such as automobiles by combining communication systems. Typical applications of telematics include a vehicle-mounted information system which supplies terminals installed on vehicles with traffic information, navigation information and the like on a real-time basis.

In such fields, a user in a remote location would require a communication device for connection to the radio pack communication network and high-level equipment using the communication device. The high-level equipment corresponds to DTE (Data Terminal Equipment), and the communication device, to DCE (Data Circuit-terminating Equipment).

In a sales management system for a vending machine, for instance, the control equipment which regulates selling actions and the inside temperature correspond to the high-level equipment. Each unit of high-level equipment is connected to a predetermined network via a communication device regularly or at random timing, and is connected via the network to a predetermined management computer. The high-level equipment connected to the management computer transmits various sets of data on the objects to be controlled.

However, in conventional systems of this kind, the communication speed between the high-level equipment and the management computer was not always high enough. A conventional sewage flow rate monitoring system will be described below by way of example. In this system, the communication protocol used between the high-level equipment and the management computer is TCP/IP. The high-level equipment forms TCP connection with the management computer, and transmits flow rate data to the management computer over the connection. Here, the high-level equipment detects flow rate data at relatively short intervals of time, and consecutively transmits the detected flow rate data to the management computer. When data are to be consecutively transmitted over the TCP connection in this way, the high-level equipment cannot transmit the next set of data unless it receives a confirming response TCP packet from the management computer at every time of data transmission. However, as a delay of a few hundreds of milliseconds arises until the confirming response TCP packet arrives where a radio packet communication network is to be used as the communication route, there has been a problem that the throughput cannot be sufficiently enhanced.

An object of the present invention is to enhance the throughput of communication using a radio packet communication network.

In order to achieve the object stated above, the present application proposes a connection adapter for communication devices comprising: a first interface for connection to a communication device for use in a radio packet communication network; a second interface for connection to high-level equipment which performs communication utilizing TCP/IP by using said communication device; a connection controller which controls the connection between said high-level equipment and said radio packet communication network; and a communication controller which relays communication by said high-level equipment using said communication device; wherein: (a) when detecting a TCP packet transmitted from the high-level equipment to the radio packet communication network, said communication controller relays said TCP packet to the radio packet communication network; (b) said communication controller delivers in response to the high-level equipment, without waiting for an arrival of a confirming response TCP packet responding to said TCP packet from the radio packet communication network, a TCP packet having same contents as said confirming response TCP packet; and (c) upon receipt of said confirming response TCP packet from the radio packet communication network, said communication controller discards the confirming response TCP packet.

According to the invention, since the connection adapter intervening between the high-level equipment and the communication device responds to a TCP packet transmitted by the high-level equipment to a communication destination by delivering the high-level equipment a confirming response TCP packet on behalf of the communication destination of the high-level equipment. This enables the high-level equipment to receive the confirming response TCP packet without being affected by any delay in the radio packet communication network. Therefore, the high-level equipment can transmit the next packet without delay, and accordingly the throughput of data transmitted from the high-level equipment is enhanced.

The high-level equipment corresponds to DTE (Data Terminal Equipment), and the communication device, to DCE (Data Circuit-terminating Equipment).

The present application also proposes a version of the foregoing connection adapter further comprising: a temporary packet storage for temporarily storing TCP packets transmitted from the high-level equipment to the radio packet communication network, wherein: said communication controller, when received a TCP packet of retransmission request from the radio packet communication network, retransmits a TCP packet stored in said temporary packet storage to the radio packet communication network without relaying the received TCP packet to the high-level equipment.

According to the invention under the present application, processing of retransmission to compensate for any communication trouble in the radio packet communication network can be carried out by the connection adapter on behalf of the high-level equipment, so that the high-level equipment is relieved early from the pertinent communication processing while alleviating in the load pertaining to communication processing.

Other objects, configurative aspects and advantages of the present invention will become more apparent from the following detailed description.

In the Drawings;
Fig. 1 shows the network configuration of a system using a connection adapter for communication devices;
Fig. 2 shows the configuration of the connection adapter;
Fig. 3 illustrates one example of set information in the connection adapter;
Fig. 4 illustrates the sequence of starting communication from high-level equipment;
Fig. 5 illustrates address conversion processing;
Fig. 6 illustrates the sequence of starting communication from a management computer;
Fig. 7 illustrates the sequence of starting communication from the management computer;
Fig. 8 illustrates address conversion processing;
Fig. 9 is a flow chart illustrating the control of TCP packets;
Fig. 10 is a flow chart illustrating the control of TCP packets;
Fig. 11 is a flow chart illustrating the control of TCP packets;
Fig. 12 is a sequence chart of TCP communication;
Fig. 13 is a sequence chart of TCP communication; and
Fig. 14 illustrates the status transition of a temporary packet storage unit.

A communication system, which is an embodiment of the present invention, will be described with reference to accompanying drawings.

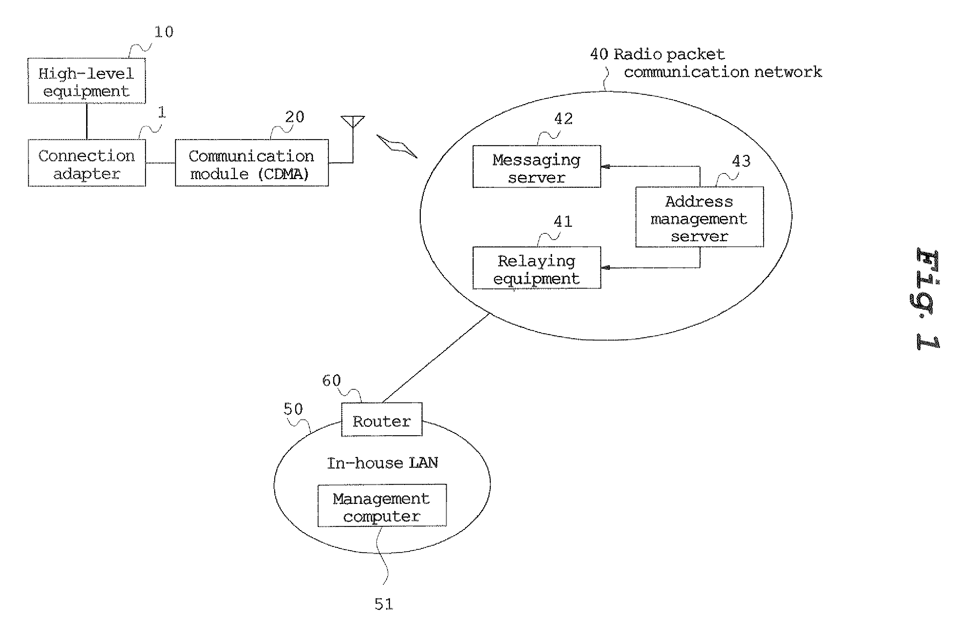

Fig. 1 shows the configuration of a telemetering system using the communication system according to the invention.

This system provides, as shown in Fig. 1, a network environment connected to high-level equipment 10, which may be a computer for sewage flow rate monitoring for instance, and an in-house LAN 50 via a radio packet communication network 40.

It is supposed here that the high-level equipment 10 and a terminal in the in-house LAN 50 (a management computer 51 in Fig. 1) are set for use by a network connection service which assigns IP addresses in a fixed manner. On the other hand, the radio packet communication network 40 is supposed to provide another network service which assigns IP addresses dynamically. According to the invention disclosed by the present application, a connection adapter 1 is arranged to intervene between the high-level equipment 10 and a communication module 20, and this connection adapter 1 absorbs differences in the network environment.

The high-level equipment 10 corresponds to DTE (Data Terminal Equipment). This high-level equipment 10 is designed to match a specific carrier and a network connection service provided by that carrier. More specifically, it presupposes the use of a network connection service which assigns a fixed IP address to each connection terminal. The high-level equipment 10 is also designed to be connected to a communication module matching the service and to match a connection protocol, an authentication protocol and the like matching that service.

The network connection service which the high-level equipment 10 in this configuration presupposes will be described. In this network connection service, a telephone number is allocated in advance to each communication module by the carrier. The radio packet communication network provided by this network connection service is provided with relaying equipment which performs connection control, packet relaying and so forth. To the relaying equipment, a telephone number is allocated, corresponding to an in-house LAN which is the network to be connected to. When a call is initiated to the telephone number of the relaying equipment within the radio packet communication network, the terminal having the communication module is connected to a predetermined network, such as an in-house LAN. Connection to the relaying equipment is permitted only from a communication module to which a telephone number is allocated in advance.

The present invention presupposes the use of such high-level equipment 10 and a management computer 51 as they are, and allows architecting of a network system even in the radio packet communication network 40 in which the network connection service assigning dynamic IP addresses is provided.

Next, the network connection service which assigns dynamic IP addresses and is used in this embodiment of the invention will be described. In this network connection service, a telephone number is allocated to the communication module 20 in advance by the carrier. In this radio packet communication network 40, as shown in Fig. 1, there is provided relaying equipment 41 which performs connection control, packet relaying and so forth. The terminal having the communication module 20 is connected to the radio packet communication network 40 by designating a predetermined special number and initiating a call to that number. This terminal is made connectable to the in-house LAN 50, the network to which it is to be connected, by performing authentication processing with the relaying equipment 41 using PAP (Password Authentication Protocol). In the PAP authentication, the network to be connected to is specified by including a user name which specifies the destination of connection. In this network connection service, a group of IP addresses in a predetermined range are allocated by the carrier to the radio packet communication network 40. An IP address included in the group of IP addresses is dynamically allocated to the communication module 20 by IPCP (Internet Protocol Control Protocol).

The IP address assigned to the connection terminal here is a predetermined one. As shown in Fig. 1, an address management server 43 is disposed in the radio packet communication network 40. This address management server 43 manages a list of the telephone numbers of connection terminals and IP addresses to be distributed to the terminals having those telephone numbers. The address management server 43 is provided with an address matching table stating the relationship of matching between the telephone numbers and the IP addresses. This address management server 43 also provides users with interfaces for updating the address matching table.

In this connection service, the radio packet communication network 40, when a terminal comes into connection, acquires a telephone number of that connection terminal. Then it acquires an IP address matching that telephone number from the address matching table, and distributes the acquired IP address to the connection terminal. This address distribution uses the IPCP mentioned above. Thus in this embodiment, though it uses the IPCP which is a dynamic IP assigning technique, the IP address distributed is a predetermined one.

Further in this connection service, the radio packet communication network 40 receives from the in-house LAN 50 an IP packet destined for the IP address matching the terminal and, when that terminal is not connected to the radio packet communication network 40, a messaging server 42 transmits a message. More specifically, the messaging server 42 acquires from the address management server 43 a telephone number matching the received IP packet, and transmits the message to that telephone number. This messaging service is not a network connection service using TCP/IP, but is implemented by a unique protocol using the radio communication network. This enables the terminal to recognize the receipt of a connection request from the in-house LAN 50.

Next, the connection adapter 1 will be described in detail. This connection adapter 1 is intended to connect the high-level equipment 10 corresponding to Data Terminal Equipment and the communication module 20 corresponding to DCE (Data Circuit-terminating Equipment). The connection adapter 1 in this embodiment, it matches the communication module 20 of the CDMA (Code Division Multiple Access) standards. The communication module 20 is a communication device to be connected to the radio packet communication network 40, and matches the communication standards and the communication protocol service determined by the carrier on its own.

The high-level equipment 10, as stated above, is designed to match a specific carrier and the service provided by that carrier. More specifically, it is designed to accept the connection of a communication module matching that service and to be compatible with a connection protocol, an authentication protocol and the like matching that service. The high-level equipment 10 pertaining to this embodiment is supposed to permit direct connection to a communication module of the PDC (Personal Digital Cellular) standards and a communication module of the PHS (Personal Handy-phone System) standards. It is further supposed to be made connectable to the in-house LAN 50 via each radio packet communication network by using these communication modules. The connection adapter 1 of this embodiment is made connectable to the in-house LAN 50 via the radio packet communication network 40 by using the communication module 20 of the CDMA standards without requiring remodeling or altering the high-level equipment 10. The connection adapter 1 will be described in further detail below.

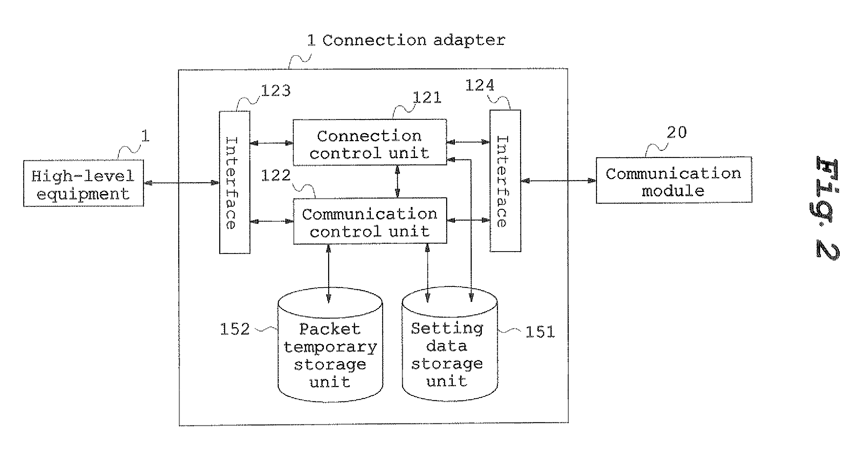

A configurative diagram of the connection adapter 1 of this embodiment of the invention will be described with reference to Fig. 2. Fig. 2 is a functional block diagram of the connection adapter 1. Only those configurative elements relevant to the essentials of the invention are stated here, with other elements omitted.

As shown in Fig. 2, the connection adapter 1 is provided with a connection control unit 121 for performing connection control such as establishment of line connection, a communication control unit 122 for controlling data communication over a connection established by the connection control unit 121, an interface 123 for interfacing with the high-level equipment 10, an interface 124 for interfacing with the communication module 20, a setting data storage unit 151 in which various setting data are stored and a packet temporary storage unit 152 for temporarily storing packets. The connection control unit 121 performs line connection control by AT commands and IP layer connection control by LCP (Link Control Protocol) and IPCP. The communication control unit 122 performs processing of conversion of IP addresses contained in the headers of the IP layer, processing of proxy responses regarding TCP packets and so forth in data communication over the connection established by the connection control unit 121.

The connection control unit 121 and the communication control unit 122 subject data between the high-level equipment 10 and the communication module 20 to conversion, transmission, discarding and other manners of processing in accordance with predetermined rules. The data necessary for these manners of data processing are stored in the setting data storage unit 151.

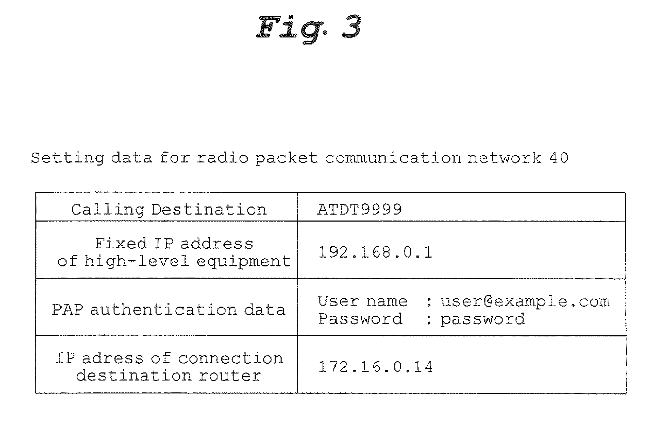

The data stored in the setting data storage unit 151 will be described with reference to Fig. 3. As shown in Fig. 3, call initiation commands (including telephone numbers) for connection to the radio packet communication network 40, the fixed IP address of the high-level equipment 10, authentication data to be needed at the time of connection to the radio packet communication network 40, and the IP address of a router 60 which is the destination of connection are stored. The setting data storage unit 151 is formed of a nonvolatile memory, such as an EPROM for instance.

The packet temporary storage unit 152 temporarily stores packets for retransmission and other manners of processing of packets, to be described afterwards, at the communication control unit 122. The packet temporary storage unit 152 is formed of a storage medium, such as a RAM for instance.

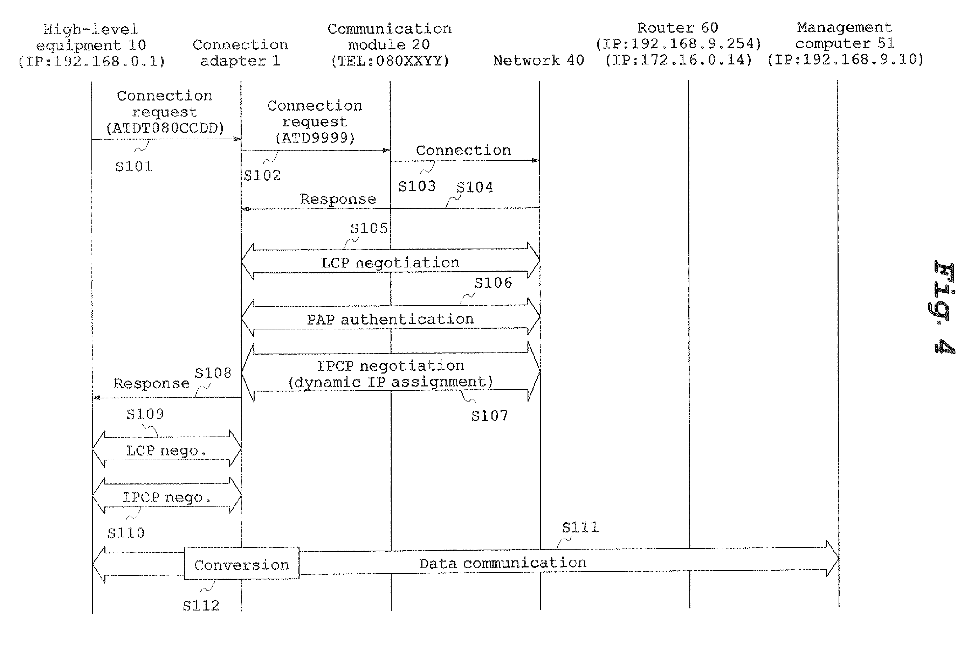

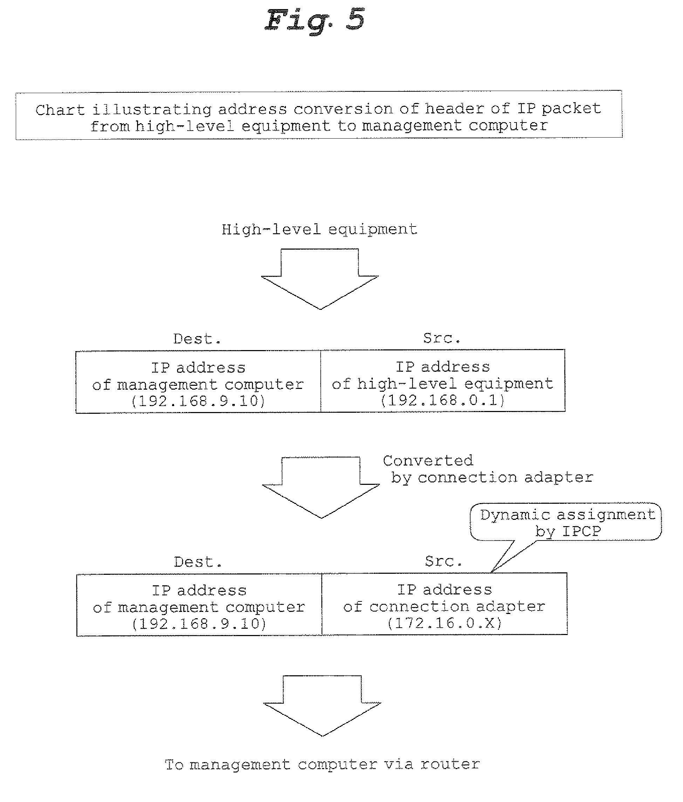

Next, the communication procedure in this system will be described with reference to drawings. First, a case of starting communication from the high-level equipment 10 to the management computer 51 will be described with reference to Fig. 4 and Fig. 5. Fig. 4 is a sequence chart of a case of starting communication from the high-level equipment to the management computer, and Fig. 5 illustrates the conversion process of an IP address stated in the header of an IP packet transmitted from the high-level equipment.

As shown in Fig. 4, when the high-level equipment 10 initiates a call to the connection adapter 1 with an "ATDT080CCDD" command (step S101), the connection control unit 121 of the connection adapter 1 converts the command into "ATD9999" and transfers it to the communication module 20 (step S102). This call initiation may be triggered by, for instance, the generation of an IP packet having a destination address of 192.168.9.10 as shown in Fig. 5. The AT command causes the communication module 20 to initiate a call to the relaying equipment 41 in the radio packet communication network 40 (step S103). The connection control unit 121 of the connection adapter 1, upon receiving a response "CONNECT" to the effect that connection has been completed at the line level via the communication module 20 (step S104), starts processing to connect the connection adapter 1 to the in-house LAN 50 by PPP (Point-to-Point Protocol).

First, the connection control unit 121 of the connection adapter 1 starts an LCP negotiation with the relaying equipment 41 of the radio packet communication network 40 (step S105). Next, the connection control unit 121 of the connection adapter 1 processes PAP authentication with the relaying equipment 41 of the radio packet communication network 40 (step S106). This PAP authentication, though it is not supposed for the high-level equipment 10, is required when the radio packet communication network 40 pertaining to this embodiment is to be used. Therefore in this embodiment, the connection adapter 1 performs this authentication on behalf of the high-level equipment 10. Upon completion of this authentication processing, the connection control unit 121 of the connection adapter 1 starts an IPCP negotiation with the relaying equipment 41 of the radio packet communication network 40 (step S107). This results in completion of the IPCP negotiation, and a dynamic IP address of 172.16.0.X is assigned to the connection control unit 121 of the connection adapter 1 from the radio packet communication network 40. The IP address assigned here is predetermined for the communication module 20, which is a connection terminal. The assigned dynamic IP address is stored into storage means such as an EPROM (not shown).

Upon completion of the PPP negotiation, the connection control unit 121 transmits to the high-level equipment 10 a response "CONNECT" to the effect that connection has been completed at the line level (step S108). Having received that response, the high-level equipment 10 starts an LCP negotiation and an IPCP negotiation (steps 109, S110). A point to be noted here is that the connection control unit 121 of the connection adapter 1 responds to the high-level equipment 10.

As the foregoing processing completes the connection between the high-level equipment 10 and the in-house LAN 50, the high-level equipment 10 starts data communication to the management computer 51 (step S111). Hereupon, the communication control unit 122 of the connection adapter 1 performs address conversion of the header of the IP packet (step S112). More specifically, as shown in Fig. 5, the fixed IP address (192.168.0.1) and the dynamic terminal IP address (172.16.0.X) are converted into each other. This processing makes possible communication with the management computer 51 started from the high-level equipment 10.

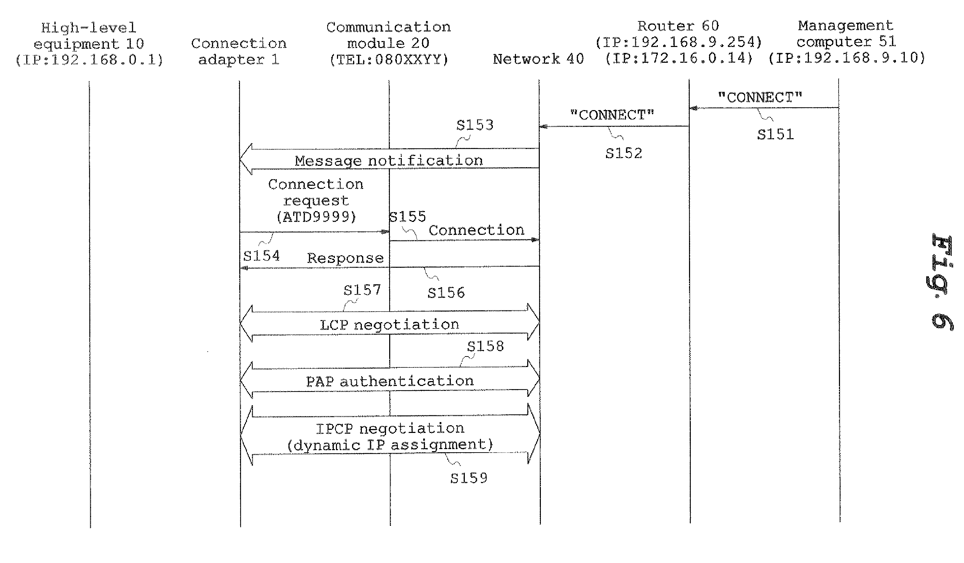

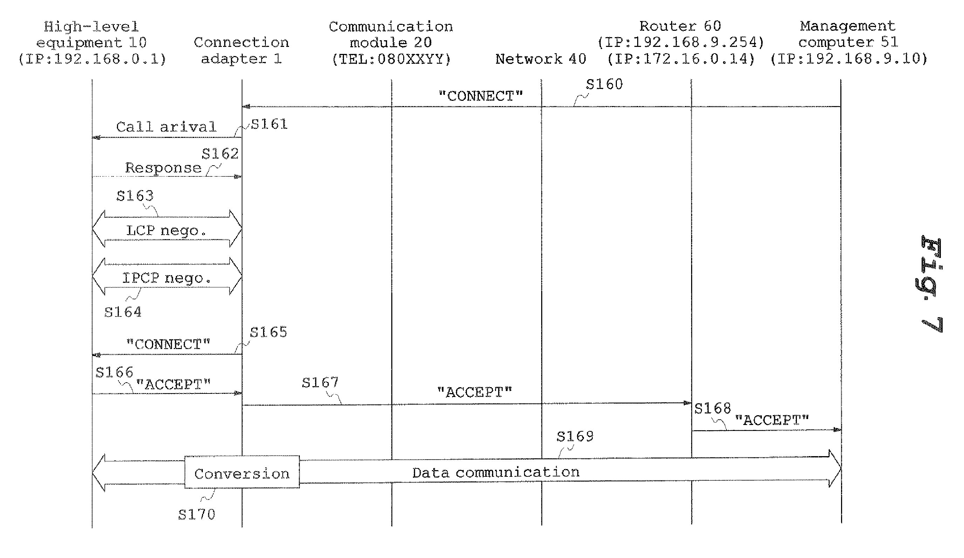

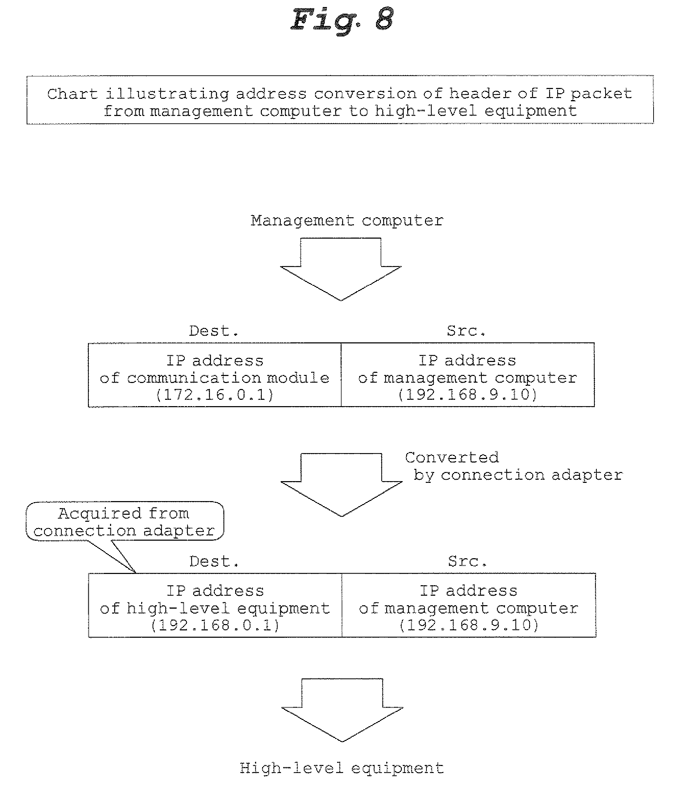

Next, a case in which communication is started from the management computer 51 of the in-house LAN 50 to the high-level equipment 10 will be described with reference to Fig. 6 through Fig. 8. Fig. 6 and Fig. 7 are sequence charts of communication started from the management computer, and Fig. 8 illustrates the process of address conversion.

It is supposed here that the address management server 43 allocates an IP address of "172.16.0.1" to the communication module 20 connected to the high-level equipment 10.

When the management computer 51, in order to communicate with the high-level equipment 10 which is a communication destination, issues a connection request destined for the IP address "172.16.0.1" of the communication module 20 connected to the high-level equipment 10 (step S151), the router 60 relays the packet to the radio packet communication network 40 in accordance with the usual routing rules (step S152).

The radio packet communication network 40 references the destination IP address of the packet received from the router 60, and acquires a telephone number matching this IP address from the address management server 43. Then, the radio packet communication network 40 notifies the holder of the telephone number of the receipt of a connection request from the in-house LAN 50 by using a messaging service (step S153). The radio packet communication network 40 discards the packet pertaining to the connection request received from the router 60.

The connection control unit 121 of the connection adapter 1 having received the message starts processing of connection to the in-house LAN 50 on the basis of setting data stored in the setting data storage unit 151. More specifically, it delivers an "ATD9999" command to the communication module 20 (step S154). In response to this AT command, the communication module 20 initiates a call to the relaying equipment 41 of the radio packet communication network 40 (step S156). The connection control unit 121 of the connection adapter 1, upon receipt of a response "CONNECT" to the effect that connection has been completed at the line level via the communication module 20 (step S156), starts processing to connect the connection adapter 1 to the in-house LAN 50 by PPP.

First, the connection control unit 121 of the connection adapter 1 starts an LCP negotiation with the relaying equipment 41 of the radio packet communication network 40 (step S157). Next, the connection control unit 121 of the connection adapter 1 processes PAP authentication with the relaying equipment 41 of the radio packet communication network 40 (step S158). Then, the connection control unit 121 of the connection adapter 1 starts an IPCP negotiation between the connection adapter 1 and the relaying equipment 41 of the radio packet communication network 40 (step S159). This results in completion of the IPCP negotiation, and a dynamic IP address of 172.16.0.X is assigned to the connection control unit 121 of the connection adapter 1 from the radio packet communication network 40. As stated above, the IP address assigned here is predetermined for the communication module 20, which is a connection terminal. The assigned dynamic IP address is stored into storage means such as an EPROM (not shown).

Upon completion of the PPP negotiation, a connection requesting packet arrives at the connection adapter 1 from the management computer 51 (step S160). As stated above, the radio packet communication network 40 discarded the packet delivered by the management computer 51 at step S151. Therefore, the management computer 51 is unable to receive the response to the connection requesting packet, and retransmits the connection requesting packet owing to a timeout. Since the processing from steps S153 through S159 described above takes some time, some of the retransmitted packets further run into a timeout. Therefore, the connection requesting packet arriving at the connection adapter 1 is the latest of the number of retransmitted packets.

The connection control unit 121 of the connection adapter 1, upon receipt of the connection requesting packet from the management computer 51, notifies the high-level equipment 10 of the call arrival (step S161). The high-level equipment 10, upon receipt of the notification of the call arrival, notifies the connection adapter 1 of the response to that notification of the call arrival (step S162), and at the same time starts an LCP negotiation and an IPCP negotiation (steps 163, S164). A point to be noted here is that the connection control unit 121 of the connection adapter 1 responds to the high-level equipment 10.

Upon completion of this PPP negotiation, the connection control unit 121 of the connection adapter 1 transfers to the high-level equipment 10 the connection requesting packet received from the management computer 51 at step S160 (step S165). Having received the connection requesting packet, the high-level equipment 10 returns the response to the connection adapter 1 (step 166). The connection adapter 1 relays the response packet to the router 60 (step S167). The router 60 relays the response packet to the management computer 51 in accordance with the usual routing rules step S168).

As the foregoing processing completes the connection between the high-level equipment 10 and the management computer 51, the high-level equipment 10 starts data communication to the management computer 51 (step S169). Hereupon, the communication control unit 122 of the connection adapter 1 performs address conversion of the header of the IP packet (step S170). More specifically, as shown in Fig. 8, the fixed terminal IP address (192.168.0.1) and the dynamic terminal IP address (172.16.0.1) are converted into each other.

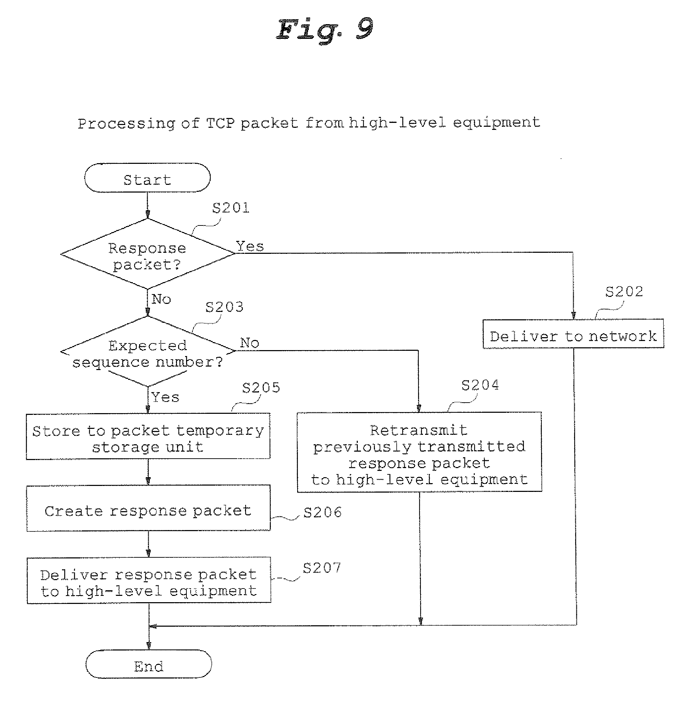

Next, the processing of the TCP packet at the connection adapter 1 in the communication between the high-level equipment 10 and the management computer 51 at step S111 and step S169 will be described with reference to Fig. 9 through Fig. 14.

First, the control of the TCP packet delivered from the high-level equipment 10 to the radio packet communication network 40 will be described with reference to the flow chart of Fig. 9.

The communication control unit 122 of the connection adapter 1 determines whether or not the TCP packet received from the high-level equipment 10 is a confirming response packet to the TCP packet from the management computer 51 (step S201). In other words, the communication control unit 122 determines whether or not the TCP packet received from the high-level equipment 10 is a packet involved in the connection established from the management computer 51 to the high-level equipment 10. If it is a confirming response packet, namely if it is a packet involved in the connection established from the management computer 51 to the high-level equipment 10, the communication control unit 122 delivers that packet to the radio packet communication network 40 (step S202).

On the other hand, if the TCP packet received from the high-level equipment 10 is not a confirming response packet, namely if it is a packet involved in the connection established from the high-level equipment 10 to the management computer 51, the communication control unit 122 first checks whether or not the sequence number of the packet is a number expected for TCP/IP according to the rules (step S203). More specifically, by calculating the sum of the sequence number of the TCP packet previously received from the high-level equipment 10 and the packet length, the sequence number expected for the next packet is figured out. Then it is determined whether or not the sequence number that is figured out is identical with the sequence number of the just received TCP packet. If it is not, a packet loss has presumably occurred between the high-level equipment 10 and the connection adapter 1, and accordingly the communication control unit 122 retransmits the previously transmitted confirming response packet to the high-level equipment 10 to urge retransmission of the lost packet (step S204). This processing conforms to usual implementation in a TCP/IP stack.

If identity in sequence number is found at step S203 above, the communication control unit 122 inputs the pertinent TCP packet into the packet temporary storage unit 152 to transmit it to the radio packet communication network 40 (step S205). The processing of delivering the packet from the packet temporary storage unit 152 will be described afterwards. Next, the communication control unit 122 creates on behalf of the management computer 51 the same confirming response packet as the confirming response packet to the pertinent TCP packet (step S206). Next, the communication control unit 122 delivers to the high-level equipment 10 the confirming response packet it has created in proxy (step S207). Regarding the first TCP packet in the connection established from the high-level equipment 10 to the management computer 51, there is no previous packet to compare with at step S203. In this case, therefore, the processing of steps S206 through S207 is performed.

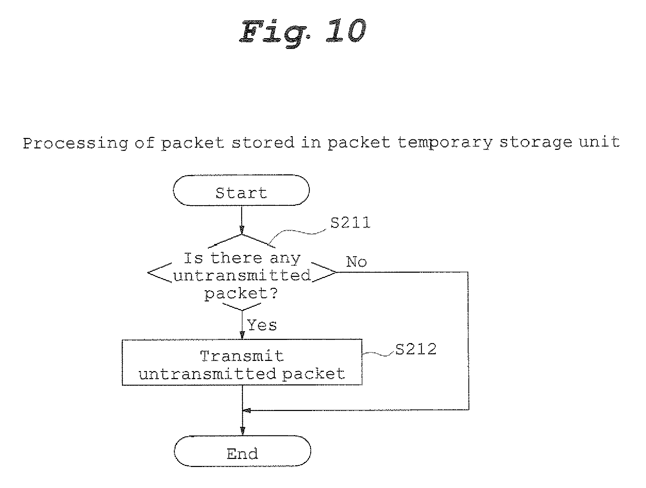

The communication control unit 122 of the connection adapter 1, as shown in the flow chart of Fig. 10, monitors the presence or absence of any untransmitted TCP packet in the packet temporary storage unit 152 (step S211). If there is any untransmitted TCP packet, the communication control unit 122 delivers the remaining TCP packet or packets to the radio packet communication network 40 (step S219). A point to be noted here is that the communication control unit 122, even if any such TCP packet is delivered to the radio packet communication network 40, will not immediately delete the TCP packet from the packet temporary storage unit 152. This is to prepare for retransmission processing to be described afterwards.

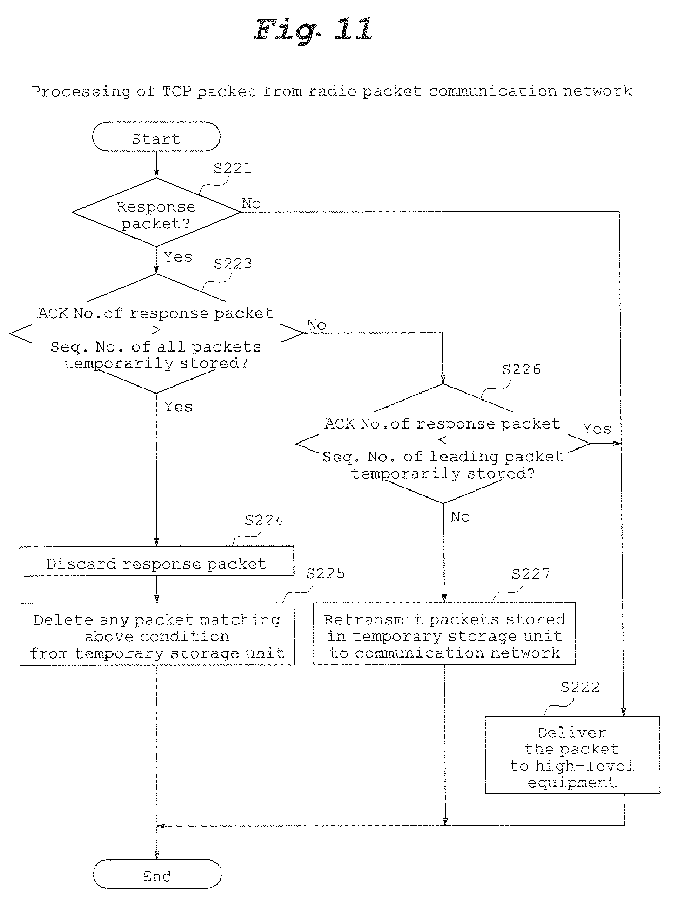

Next, the control of a TCP packet received from the radio packet communication network 40 will be described with reference to the flow chart of Fig. 11.

The communication control unit 122 of the connection adapter 1 determines whether or not the TCP packet received from the radio packet communication network 40 is a confirming response packet from the management computer 51 responding to the TCP packet from the high-level equipment 10(step S221). In other words, the communication control unit 122 determines whether or not the TCP packet received from the radio packet communication network 40 is a packet involved in the connection established from the high-level equipment 10 to the management computer 51. If it is not the confirming response packet, namely if it is a packet involved in the connection established from the management computer 51 to the high-level equipment 10, the communication control unit 122 delivers that packet to the high-level equipment 10 (step S222).

On the other hand, if the TCP packet received from the radio packet communication network 40 is a confirming response packet, namely if it is a packet involved in the connection established from the high-level equipment 10 to the management computer 51, the communication control unit 122 checks whether or not the ACK number of the confirming response packet is a number expected for TCP/IP according to the rules. More specifically, first in a case in which the ACK number of the received packet is greater than the sequence numbers of all packets stored in the packet temporary storage unit 152 (step S223), it is judged that no packet loss has occurred, and the pertinent packet is discarded without being delivered to the high-level equipment 10 (step S224). Next, the communication control unit 122 deletes from the packet temporary storage unit 152 the packets for retransmission stored in the storage unit 152 (step S225). The packets to be deleted here are all the packets whose sequence numbers are smaller than the ACK number of the received TCP packet. On the other hand, if there is any packet whose sequence number is not smaller than the ACK number of the received TCP packet is stored in the packet temporary storage unit 152 (step S223) and the ACK number of the received TCP packet is equal to the sequence number of the leading (namely the oldest) packet in the packet temporary storage unit 152 (step S226), it is judged that some packet loss has occurred in the radio packet communication network 40, and the packet stored in the packet temporary storage unit 152 is retransmitted (step S227). If the ACK number of the received TCP packet is smaller than the sequence number of the leading (namely the oldest) packet in the packet temporary storage unit 152 (step S226), the packet is delivered to the high-level equipment 10 (step S222).

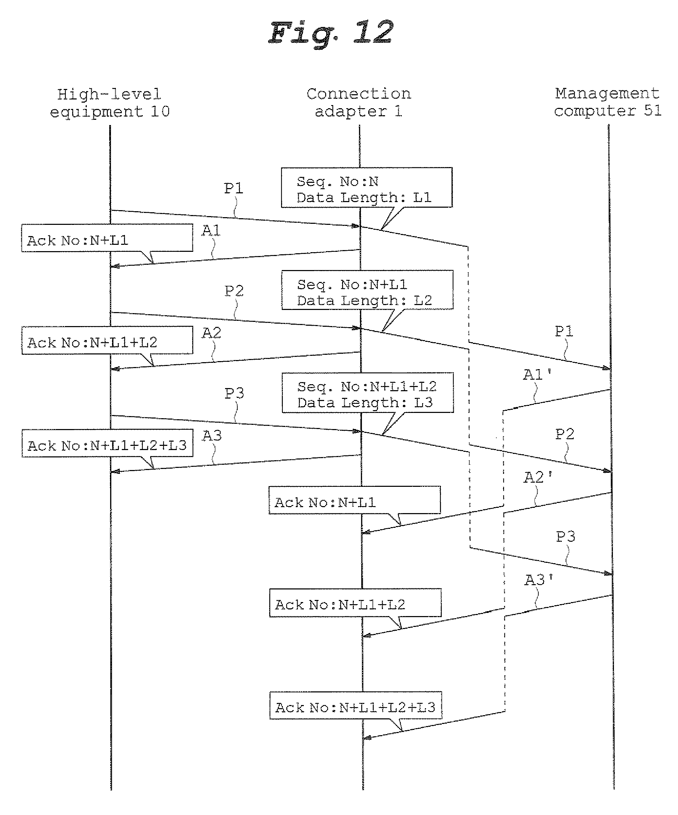

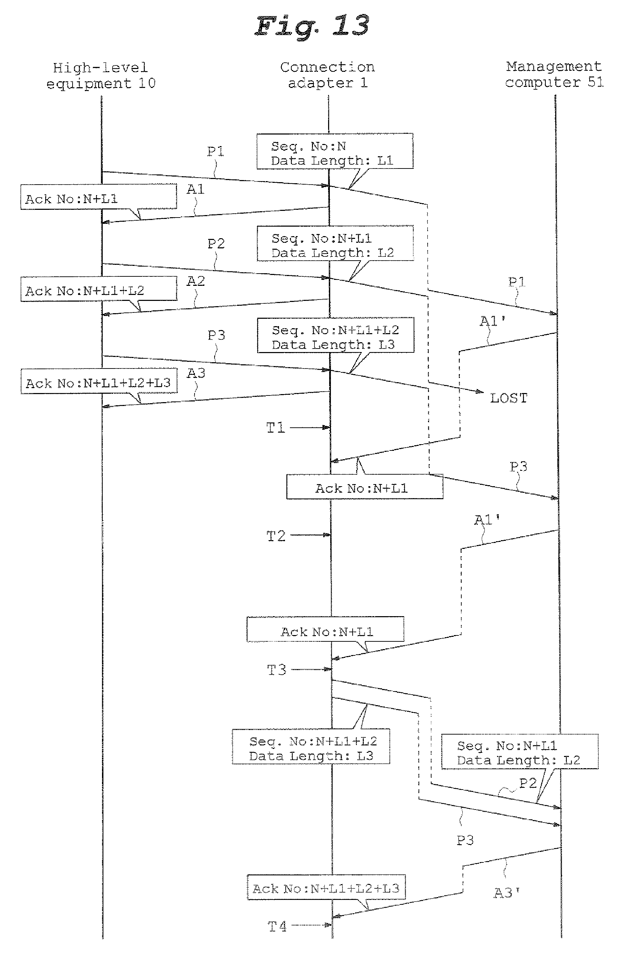

The communication sequence regarding TCP packets among the high-level equipment 10, the connection adapter 1 and the management computer 51 is shown in Fig. 12 and Fig. 13. Fig. 12 is a sequence chart of a case in which communication is normally taking place and Fig. 13, a sequence chart of a case in which a packet destined from the high-level equipment 10 for the management computer 51 has been lost in the radio packet communication network 40. Dotted lines included in lines representing the flow of packets in the radio packet communication network 40 in these carts signify delays occurring in the radio packet communication network 40.

In this embodiment, as charted in Fig. 12, the high-level equipment 10 receives the confirming response packet created by the connection adapter 1 in proxy earlier than the confirming response packet delivered by the management computer 51. Therefore, the high-level equipment 10 can consecutively deliver TCP packets without being affected by any delay in the radio packet communication network 40. This results in an enhanced transmission throughput.

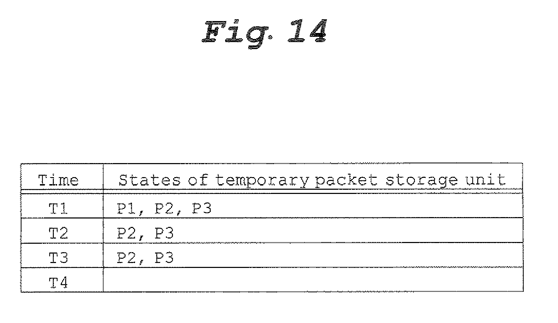

Further, as shown in Fig. 13, if the second packet P2 has been lost in the radio packet communication network 40, the management computer 51 will receive the third packet P3 next to the first packet P1. In this case, the management computer 51 requests the retransmission of the first and following packets by transmitting a confirming response packet A1' matching the first packet P1 to the high-level equipment 10. The connection adapter 1 having received this retransmission request retransmits the packets P2 and P3 stored in the packet temporary storage unit 152. The management computer 51 transmits to the high-level equipment 10 side a confirming response packet A3' to the effect that the packets up to P3 have been received. Transitions of packets stored in the packet temporary storage unit 152 at the time of communication shown in Fig. 13 are listed in Fig. 14. Fig. 14 shows the state at the point of time T1 when the connection adapter 1 has delivered the confirming response packet A3' to the high-level equipment 10, the states at the points of time T2 and T3 when the confirming response packet A1' has been received from the management computer 51, and the state at the point of time T4 when the confirming response packet A3' has been received from the management computer 51.

In this way, the connection adapter 1 of this embodiment makes possible communication using the radio packet communication network 40, which the high-level equipment 10 did not presuppose, without having to remodeling or altering the high-level equipment 10. Also, the connection adapter 1 of this embodiment contributes to enhancing the transmission throughput in TCP communication because a confirming response packet is delivered to the high-level equipment 10 on behalf of the management computer 51 in response to a TCP packet from the high-level equipment 10. The connection adapter 1 of this embodiment, as it processes retransmission to compensate for any packet loss occurring in the radio packet communication network 40, enables the high-level equipment 10 to be relieved early from the pertinent communication processing while alleviating load.

Although the present invention has been described in detail so far with respect to one embodiment thereof, the invention is not limited to this embodiment. For instance, the foregoing embodiment concerned a telemetering system for monitoring the sewage flow rate, the invention can also be applied to other telemetering systems and telematics systems as well.

Further, although the embodiments cited above are supposed to use communication modules of the CDMA standards by way of example, the invention can also be implemented with modules of other standards. Similarly, other interface standards than those cited above can also be applied on the high-level equipment side.

## Claims

1. A connection adapter for communication devices comprising:
a first interface (124) for connection to a communication device (20) for use in a radio packet communication network (40);
a second interface (123) for connection to high-level equipment (10) which performs communication utilizing TCP/IP by using said communication device (20);
a connection controller (121) which controls the connection between said high-level equipment (10) and said radio packet communication network (40); and
a communication controller (122) which relays communication by said high-level equipment (10) using said communication device (20); wherein:
(a) when detecting a TCP packet transmitted from the high-level equipment (10) to the radio packet communication network (40), said communication controller (122) relays said TCP packet to the radio packet communication network (40);
(b) said communication controller (122) delivers in response to the high-level equipment (10), without waiting for an arrival of a confirming response TCP packet responding to said TCP packet from the radio packet communication network (40), a TCP packet having same contents as said confirming response TCP packet; and
(c) upon receipt of said confirming response TCP packet from the radio packet communication network (40), said communication controller (122) discards the confirming response TCP packet.

2. The connection adapter for communication devices according to claim 1, further comprising:
a temporary packet storage (152) for temporarily storing TCP packets transmitted from the high-level equipment (10) to the radio packet communication network (40), wherein:
said communication controller (122), when received a TCP packet of retransmission request from the radio packet communication network (40), retransmits a TCP packet stored in said temporary packet storage (152) to the radio packet communication network (40) without relaying the received TCP packet to the high-level equipment (10).

3. The connection adapter for communication devices according to claim 2, wherein:
said communication controller (122), when received said confirming response TCP packet from the radio packet communication network (40), deletes TCP packets prior to a TCP packet corresponding to said confirming response packet from said temporary packet storage (152).
